(19) Europäisches Patentamt / European Patent Office / Office européen des brevets

(11) **EP 4 667 091 A1**

(12) **EUROPEAN PATENT APPLICATION**
published in accordance with Art. 153(4) EPC

(43) Date of publication:
**24.12.2025 Bulletin 2025/52**

(21) Application number: **24803786.3**

(22) Date of filing: **10.05.2024**

(51) International Patent Classification (IPC):
**B01D 63/02** *(2006.01)*    **H01M 8/04119** *(2016.01)*

(52) Cooperative Patent Classification (CPC):
**B01D 63/02; H01M 8/04119**

(86) International application number:
**PCT/KR2024/006409**

(87) International publication number:
**WO 2024/232733 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023 KR 20230061334**

(71) Applicant: **Kolon Industries, Inc.**
**Seoul 07793 (KR)**

(72) Inventors:
• **OH, Young Seok**
  **Seoul 07793 (KR)**
• **LEE, Ah Reum**
  **Seoul 07793 (KR)**
• **LEE, Ji Yoon**
  **Seoul 07793 (KR)**
• **CHO, Han Moon**
  **Seoul 07793 (KR)**

(74) Representative: **Vossius & Partner**
**Patentanwälte Rechtsanwälte mbB**
**Siebertstrasse 3**
**81675 München (DE)**

(54) **HOLLOW FIBER MEMBRANE FOR HUMIDIFIER, MANUFACTURING METHOD THEREOF, AND HUMIDIFIER INCLUDING HOLLOW FIBER MEMBRANE**

(57)    The present disclosure relates to a hollow fiber membrane including a polymer and an antioxidant, wherein the antioxidant is included in an amount of 0.01 parts to 5 parts by weight based on 100 parts by weight of the hollow fiber membrane.

FIG. 1

## Description

Technical Field

The present disclosure relates to a hollow fiber membrane for a humidifier having a novel composition, a method of manufacturing the same, and a humidifier including the hollow fiber membrane.

Background Art

A fuel cell is a power-generating cell that converts the chemical energy of hydrogen and oxygen into electrical energy through an electrochemical reaction. Unlike ordinary chemical batteries such as dry cells or rechargeable batteries, a fuel cell may continuously produce electricity as long as hydrogen and oxygen are supplied, and has an advantage of being more than twice as efficient as an internal combustion engine since it does not have heat loss.

Additionally, because water is generated as a product when hydrogen and oxygen are used as raw materials, a fuel cell is an environmentally friendly energy generation device that does not produce pollutants. Therefore, a fuel cell is not only environmentally friendly but also has the advantage of reducing concerns about resource depletion due to increased energy consumption.

Fuel cells may be classified into polymer electrolyte membrane fuel cells (PEMFCs), phosphoric acid fuel cells (PAFCs), molten carbonate fuel cells (MCFCs), solid oxide fuel cells (SOFCs), and alkaline fuel cells (AFCs).

Among these, polymer electrolyte membrane fuel cells are known to be suitable for use in transportation systems, since they may operate at lower temperatures as compared to other fuel cells and have a high power density.

Meanwhile, polymer electrolyte fuel cells generally produce water through the reaction of two moles of hydrogen and one mole of oxygen in the fuel cell stack during operation, however, in the case of incomplete reactions, by-products such as peroxides or hydroxyl radicals may be generated.

When these generated peroxides or hydroxyl radicals flow from the fuel cell stack into a humidifier, they may cause oxidation of the organic hollow fiber membranes disposed in the humidifier, leading to decomposition and deterioration of the hollow fiber membranes.

The decomposition and deterioration of the hollow fiber membranes hinder the delivery of sufficiently humidified air to the fuel cell stack, thereby reducing the efficiency of the fuel cell stack and the entire fuel cell system.

Accordingly, there is still industrial demand for a hollow fiber membrane in which decomposition from peroxides or hydroxyl radicals is suppressed.

Disclosure

Technical Problem

In order to solve the above-mentioned problems, there is provided a hollow fiber membrane for a humidifier in which decomposition from peroxides or hydroxyl radicals is suppressed, a method of manufacturing the same, and a humidifier including the hollow fiber membrane.

Technical Solution

According to an aspect, provided is a hollow fiber membrane for a humidifier including a polymer and an antioxidant, wherein the antioxidant is included in an amount of 0.01 parts to 5 parts by weight based on 100 parts by weight of the hollow fiber membrane.

According to another aspect, provided is a method of manufacturing a hollow fiber membrane for a humidifier including obtaining a spinning dope by mixing an antioxidant in an amount of 0.01 parts to 5 parts by weight based on 100 parts by weight of the spinning dope, spinning the spinning dope into a coagulation bath through a nozzle, and coagulating the spinning dope in the coagulation bath.

According to another aspect, provided is a humidifier including the hollow fiber membrane.

Advantageous Effects

The hollow fiber membrane for a humidifier according to an aspect includes a polymer and an antioxidant, and by including the antioxidant in an amount of 0.01 parts to 5 parts by weight based on 100 parts by weight of the hollow fiber membrane, peroxides or hydroxyl radicals flowing into the humidifier from a fuel cell stack are captured and/or decomposed, whereby decomposition of the hollow fiber membrane by the peroxides or hydroxyl radicals is suppressed. Accordingly, the chemical durability of the hollow fiber membrane is improved.

Description of Drawings

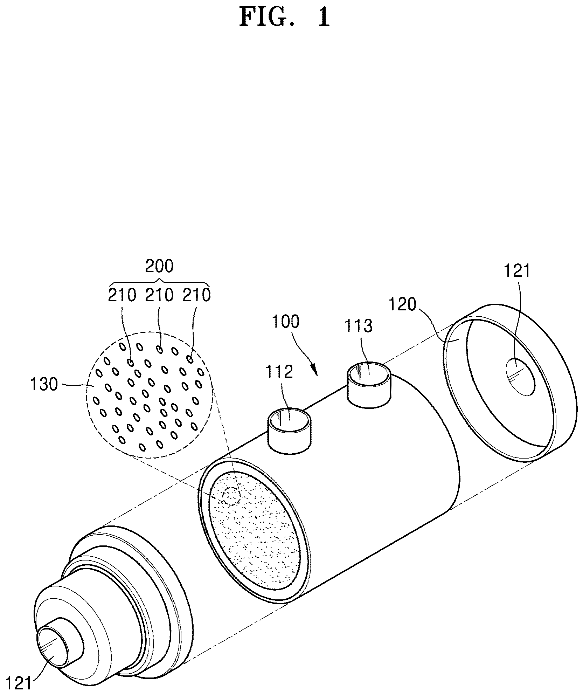

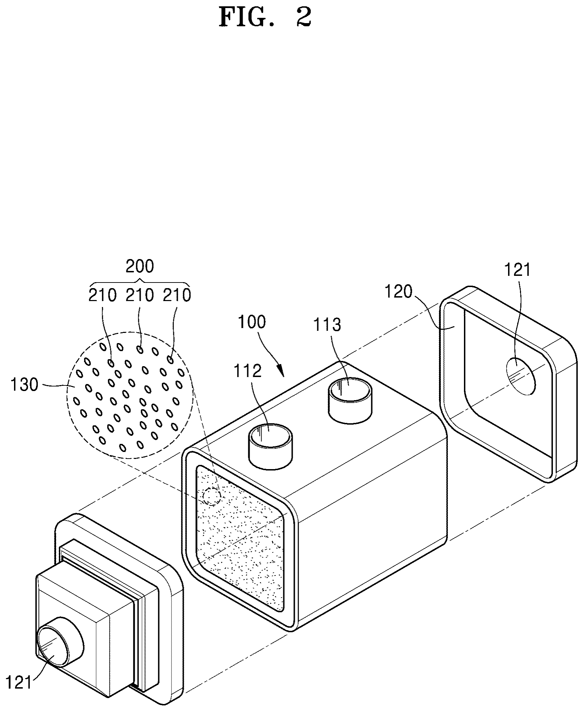

FIGS. 1 and 2 are exploded perspective views of a humidifier for a fuel cell according to an embodiment.

Mode for Invention

The present inventive concept described below may be subject to various modifications and may have various embodiments. Specific embodiments are illustrated in the drawings and are described in detail in the detailed description. However, this is not intended to limit the present inventive concept to particular embodiments, but it should be understood to include all modifications, equivalents, or alternatives falling within the technical scope of the present inventive concept.

The terminology used below is merely for the purpose of describing particular embodiments and is not intended to limit the present inventive concept. Unless the context clearly indicates otherwise, the singular expressions include the plural. Herein, the terms "comprising," "having," and the like are intended to indicate the presence of the stated features, numerals, processes, operations, components, parts, elements, materials, or combinations thereof, but are not intended to preclude the possibility that one or more other features, numerals, processes, operations, components, parts, elements, materials, or combinations thereof are also present or may be added.

When an element is referred to as being "connected to" or "coupled to" another element, it should be understood that the element may be directly connected or coupled to the other element, or that a further element may be present between them. In contrast, when an element is referred to as being "directly connected to" or "directly coupled to" another element, it should be understood that there are no further elements between them.

Throughout the specification, when a portion such as a layer, film, region, or plate is described as being "on" or "over" another portion, it should be understood that it may be directly on the other portion or that there may be intervening portions therebetween. The terms "first," "second," etc., throughout the specification may be used to describe various elements, but the elements should not be limited by these terms. The terms are used solely for the purpose of distinguishing one component from another.

The term "polymer", as used throughout the specification, refers to a polymer formed by the polymerization of one or more monomer units, and encompasses polymer resins and polymer macromolecules.

The embodiments described below are merely illustrative, and various modifications may be made based on these embodiments.

A hollow fiber membrane for a humidifier according to an aspect includes a polymer and an antioxidant, and the antioxidant is included in an amount of 0.01 parts to 5 parts by weight based on 100 parts by weight of the hollow fiber membrane.

According to an embodiment, the antioxidant may be included in an amount of 0.1 parts to 5 parts by weight, for example, the antioxidant may be included in an amount of 1 parts to 3 parts by weight, or 2 parts to 4 parts by weight, and a range defined by any two values among the aforementioned numerical ranges may be included.

If the antioxidant is included in an amount less than 0.01 parts by weight within the hollow fiber membrane, it is insufficient to prevent the deterioration of the hollow fiber membrane caused by peroxides or hydroxyl radicals generated from the fuel cell reaction. On the other hand, if the antioxidant exceeds 5 parts by weight, the pores of the hollow fiber membrane may be blocked, resulting in a decrease in moisture exchange performance and gas permeability, thereby failing to perform the essential function of the membrane humidifier.

According to an embodiment, the antioxidant may be present and dispersed in the polymer. For example, the antioxidant may have a particle shape and may be present and dispersed in a structure embedded in the polymer. Here, the expression "present and dispersed" refers to that the antioxidant is present within the space formed by the polymer backbone.

According to an embodiment, the antioxidant may be randomly or uniformly dispersed in the polymer. For example, the antioxidant may be uniformly dispersed in the polymer.

According to an embodiment, at least a portion of the antioxidant may be exposed on the surface of the polymer. For example, a portion of the antioxidant exposed on the surface of the polymer may be embedded in the polymer, with only part thereof being exposed to the outside.

According to an embodiment, the hollow fiber membrane may include a concentration gradient region in which the concentration of the antioxidant changes within the hollow fiber membrane. For example, the concentration of the antioxidant may increase from the inner circumferential surface to the outer circumferential surface of the hollow fiber membrane.

By configuring more antioxidant to be present on the outer circumferential surface of the hollow fiber membrane, hydrogen peroxide or hydroxyl radicals flowing into the humidifier together with highly humidified air from the fuel cell stack may be effectively captured and decomposed.

According to an embodiment, the antioxidant may include an organic antioxidant, a metallic antioxidant, an organometallic antioxidant, a Hindered amine Light stabilizer (HALS)-based antioxidant, a sulfur-based antioxidant, a phosphorus-based antioxidant, or a combination thereof.

For example, the organic antioxidant may include coumaric acid, dopamine, hydroquinone, phenolphthalein, phthalic acid, acetylsalicylic acid, a phenol-based antioxidants, niacin, luminol, urea, phytic acid, glyoxal, or any mixture thereof.

For example, the metallic antioxidant may include a salt of a Ce metal such as $Ce(NO_3)_3$, $CeCl_3$, or $Ce_2(SO_4)_3$; a salt of a Mn metal such as $Mn(NO_3)$; a metal oxide such as $CeO_2$, $CeSiO_2$, $MnO_2$, or $TiO_2$ ; or any mixture thereof.

For example, the organometallic complex may include a Ce-crown complex, a Ce-phosphoric acid complex, a Ce-bipyridine complex, or any mixture thereof.

According to an embodiment, the polymer may be selected from known polymers suitable for forming a hollow fiber membrane, and, for example, may include a polyvinylidene fluoride (PVDF)-based polymer, a polysulfone-based polymer, a sulfonated polysulfone, cellulose acetate, cellulose triacetate, polymethyl methacrylate, Nafion, a polystyrene (PS)-based polymer, a polytetrafluoroethylene (PTFE)-based polymer, a perfluorosulfonic acid (PFSA)-based polymer, a polyphenylsulfone-based polymer, a polyethersulfone (PES)-based polymer, a polyacrylonitrile (PAN)-based polymer, a polyetherimide (PEI)-based polymer, a polyimide (PI)-based polymer, or any combination of the aforementioned polymers.

For example, the polymer may include a polystyrene-based polymer.

According to an embodiment, the polymer may be included in an amount of 10 parts to 35 parts by weight based on 100 parts by weight of the hollow fiber membrane. For example, the polymer may be included in an amount of 15 parts to 30 parts by weight based on 100 parts by weight of the hollow fiber membrane.

According to an embodiment, the thickness of the hollow fiber membrane may be 60 $\mu$m to 300 $\mu$m. For example, the thickness of the hollow fiber membrane may be, but is not limited to, 80 $\mu$m to 120 $\mu$m, 100 $\mu$m to 140 $\mu$m, and may have various arbitrary thickness ranges included in the above range.

According to an embodiment, the hollow fiber membrane may further include additives such as a surfactant, a hydrophilic organic compound, or a hydrophilic polymer. Such additives may be selected and added in an appropriate amount within a range that does not impair the original physical properties of the hollow fiber membrane. In addition, it will be apparent to those skilled in the art that materials conventionally used in the manufacture of hollow fiber membranes may also be used.

According to an embodiment, the antioxidant may be randomly or uniformly dispersed in the polymer of the hollow fiber membrane.

For example, the hollow fiber membrane may achieve an effect of improving durability against peroxides and hydroxyl radicals without significantly impairing the porosity of the hollow fiber membrane, by having the antioxidant uniformly dispersed in the polymer.

According to an embodiment, the hollow fiber membrane may have a cavity inside and may include a plurality of pores that allow gas communication between the inner circumferential surface and the outer circumferential surface.

According to an embodiment, the hollow fiber membrane may have a water vapor permeability of 0.1 $g/s/m^2$ or more as measured under conditions in which the shell-side dew point is 75°C, the pressure is 0.8 barg, and the flow rate is 1000 slpm. For example, the water vapor permeability may be 0.13 $g/s/m^2$. When the water vapor permeability satisfies the above range, sufficient moisture exchange performance of the hollow fiber membrane may be expected.

According to an embodiment, the hollow fiber membrane may have a nitrogen permeability of 100 $cc/min/cm^2$ or less under a pressure condition of 0.5 bar, and for example, the nitrogen permeability may be 80 $cc/min/cm^2$.

According to one embodiment, the hollow fiber membrane may have an oxygen permeability of 100 $cc/min/cm^2$ or less under a pressure condition of 0.5 bar, and for example, the oxygen permeability may be 80 $cc/min/cm^2$.

The hollow fiber membrane has the above-described water vapor permeability, nitrogen permeability, and oxygen permeability, and is suitable for use in a humidifier for a fuel cell with improved durability, since it has sufficient moisture exchange performance and gas permeability even when an antioxidant for improving durability is introduced.

A method of manufacturing a hollow fiber membrane for a humidifier according to an aspect may include, mixing a polymer and an antioxidant in an organic solvent to obtain a spinning dope, wherein the antioxidant is mixed in an amount of 0.01 to 5 parts by weight based on 100 parts by weight of the spinning dope; spinning the spinning dope into a coagulation bath through a nozzle; and coagulating the spinning dope in the coagulation bath.

With respect to the components of the method of manufacturing the hollow fiber membrane that overlap with the descriptions provided above, reference is made to the foregoing.

According to an embodiment, the process of obtaining the spinning dope may include mixing the antioxidant and the polymer in a solvent.

The solvent may include at least one of a first solvent, a second solvent and a third solvent. For example, the solvent may be a mixed solvent including two solvents from the first solvent, the second solvent, and the third solvent.

The first solvent is a solvent that does not dissolve the polymer at room temperature (e.g., 23 °C to 25 °C) but may dissolve it at a high temperature (e.g., 80 °C or higher), and may include butanol, isobutanol, octanol, pentanol, isopentanol, dimethyl phthalate, diethyl phthalate, dibutyl phthalate, dioctyl phthalate, polyoxyethylene octylphenyl ether, or a combination thereof.

The second solvent is a solvent that does not dissolve the polymer, and may include water, methanol, ethanol, isopropanol, acetone, hexane, pentane, benzene, toluene, carbon tetrachloride, o-dichlorobenzene, polyethylene glycol, or a combination thereof.

The third solvent is a solvent that may dissolve the polymer even at room temperature, and may include N-methyl-2-pyrrolidone, dimethyl sulfoxide, dimethyl acetamide, dimethyl formamide, methyl ethyl ketone, tetrahydrofuran, tetramethyl urea, or trimethyl phosphate.

Those skilled in the art may mix one or more solvents from the first solvent, the second solvent, and the third solvent, depending on the desired physical properties of the hollow fiber membrane and the characteristics of the polymer.

According to an embodiment, when the solvent is a mixed solvent of two or more solvents, the mixing ratio of the solvents may be 1:9 to 9:1 by weight, but is not limited thereto and may be appropriately selected within a range that those skilled in the art may determine, considering the content of the polymer and antioxidant, the viscosity of the spinning solution, and the physical properties of the final hollow fiber membrane.

According to an embodiment, the content of the polymer included in the spinning dope may be 10 wt% to 35 wt%. For example, the polymer content may be 15 wt% to 30 wt%, but is not limited thereto, and may be appropriately selected by those skilled in the art in consideration of the physical properties, gas permeability, and the like of the final hollow fiber membrane.

According to an embodiment, the content of the antioxidant included in the spinning dope may be 0.01 parts to 5 parts by weight. For example, the content of the antioxidant may be 1 parts to 5 parts by weight, or 2 parts to 4 parts by weight, but is not limited thereto, and those skilled in the art may select an appropriate content range by considering the physical properties of the final hollow fiber membrane, gas permeability, etc.

According to an embodiment, the temperature for mixing the polymer, antioxidant, and solvent in the process of obtaining the spinning dope may be 10 °C to 130 °C, and for example, may be 50 °C to 90°C, or 60 °C to 80°C.

According to an embodiment, the mixing time of the spinning dope may be 2 hours to 24 hours, and for example, 5 hours to 22 hours, or 6 hours to 20 hours, but is not limited thereto, and the mixing may be performed for a time within the above range until the spinning dope is uniformly mixed.

According to an embodiment, the viscosity of the spinning dope may be 5000 cps to 30000 cps at 50 °C. When the viscosity of the spinning dope satisfies the above range, smooth discharge of the hollow fiber membrane spinning dope is facilitated.

The spinning dope may be discharged from the outer tube of a multi-coaxial spinning nozzle, and simultaneously, a core liquid may be discharged from the inner tube.

The core liquid serves to form the hollow portion of the hollow fiber membrane, and may be a mixed solution in which a solvent selected from the group consisting of water, polyvinylpyrrolidone, N,N-dimethylacetamide (DMAc), N,N-dimethylformamide (DMF), N-methyl-2-pyrrolidone (NMP), dimethyl sulfoxide (DMSO), methyl ethyl ketone (MEK), gamma-butyrolactone ($\gamma$-butyrolactone), sulfolane, 1,3-dimethyl-2-imidazolidinone, and mixtures thereof is mixed with an additive selected from the group consisting of ethanol, sorbitol, polyethylene glycol, ethylene glycol, polypropylene glycol, propylene glycol, diethylene glycol, glycerin, lithium chloride, lithium bromide, and mixtures thereof.

The core liquid may have a mixed weight ratio of the solvent and the additive in the range of 70:30 to 40:60. If the weight ratio of the additive is less than 30, macrovoids in the form of fingers may be formed throughout the hollow fiber membrane. If the weight ratio of the additive exceeds 60, the phase transition speed may be slow, and a hollow fiber membrane with a blocked internal structure may be obtained.

According to an embodiment, the process of spinning the spinning dope into the coagulation bath may include spinning the discharged liquid using a multi-tubular spinning device, for example, a double-tubular spinning device or a triple-tubular spinning device, but is not limited to such multi-tubular structures and may be used without limitation as long as the discharge method may form a hollow structure.

According to an embodiment, in the process of spinning the spinning dope into the coagulation bath, the spinning temperature may be 25 °C to 100 °C, and for example, may be 30 °C to 50 °C.

According to an embodiment, in the process of spinning the spinning dope into the coagulation bath, the discharge rate may be 6 g/min to 25 g/min, and for example, may be 6 g/min to 23 g/min or 8 g/min to 20 g/min. If the discharge rate exceeds 25 g/min, it may be difficult to obtain a uniform thickness and porosity of the hollow fiber membrane. On the other hand, if the discharge rate is less than 6 g/min, nozzle clogging may occur.

After spinning the spinning dope into the coagulation bath, the spinning dope is coagulated by the coagulation liquid.

According to an embodiment, the coagulation bath may be configured as a single bath; however, it is not limited thereto and may be configured such that two or more coagulation baths are sequentially arranged. When there are two or more coagulation baths, the coagulation liquid used in each coagulation bath may be the same or different.

According to an embodiment, the coagulation liquid provided in the coagulation bath functions to coagulate the discharged liquid, which is discharged through the nozzle, into the form of a hollow fiber membrane. The coagulation liquid used in this case may be appropriately selected and used by those skilled in the art from among known coagulation liquids.

For example, the coagulation liquid may be selected from an acidic solution, water, ethanol, sorbitol, polyethylene glycol, ethylene glycol, polypropylene glycol, propylene glycol, diethylene glycol, glycerin, lithium chloride, lithium bromide, and mixtures thereof.

In this case, when a mixed solution in which two types of coagulation liquids are mixed is used as the coagulation liquid, the first solution and the second solution may be mixed in a volume ratio of 1:9 to 9:1, and for example, may be 2:8 to 8:2, 3:7 to 7:3, 4:6 to 6:4, or 5:5. The type and concentration of the coagulation liquid may be appropriately selected by those skilled in the art in consideration of the type of the dope solution and core liquid, and the physical properties of the hollow fiber membrane.

According to an embodiment, the hollow fiber membrane obtained through the coagulation bath may undergo a post-treatment process.

According to an embodiment, the post-treatment process may include chemical treatment and/or physical treatment.

For example, the chemical treatment in the post-treatment process may be performed to remove and dry the coagulation liquid contained in the pores after the formation of the hollow fiber membrane, and may include processes such as rinsing, washing, and hot water treatment.

For example, the physical treatment in the post-treatment process may include stretching, shrinking, or the like, in order to control the size and shape of the pores inside the hollow fiber membrane and to improve the tensile strength and durability of the hollow fiber membrane.

A humidifier according to an aspect may include the above-described hollow fiber membrane for a humidifier.

For details regarding the hollow fiber membrane, reference is made to the foregoing description, and the humidifier will now be described with reference to FIGS. 1 and 2.

FIGS. 1 and 2 are perspective views of a humidifier 100 for a fuel cell according to an embodiment.

As shown in FIGS. 1 and 2, the fuel cell humidifier 100 of the present invention includes a middle case 110, a cap case 120, a fixing part 130, and a hollow fiber membrane bundle 200.

The middle case 110 is combined with the cap case 120 to form the outer shape of the membrane humidifier 100. The middle case 110 and the cap case 120 may be made of a hard plastic such as polycarbonate or a metal. The middle case 110 and the cap case 120 may have a circular cross-sectional shape in the width direction, as shown in FIG. 1, or a polygonal cross-sectional shape in the width direction, as shown in FIG. 2. The polygon may be a quadrilateral, square, trapezoid, parallelogram, pentagon, hexagon, or the like, and the polygon may have rounded corners. In addition, the circular shape may also be an elliptical shape.

A second fluid inlet 112 through which a second fluid is supplied, and a second fluid outlet 113 through which the second fluid is discharged, are respectively formed in the middle case 110.

In FIGS. 1 and 2, it is illustrated that a plurality of hollow fiber membranes 210 are disposed within the middle case 110 in the form of a single hollow fiber membrane bundle 200. However, the hollow fiber membranes 210 may also be disposed in the middle case 110 in a state in which they are divided and accommodated in two or more cartridges.

A fluid inlet/outlet 121 is formed in the cap case 120. The fluid inlet/outlet 121 formed in one of the cap cases 120 coupled to each end of the middle case 110 serves as a first fluid inlet, and the fluid inlet/outlet 121 formed in the other serves as a first fluid outlet. The first fluid introduced through the fluid inlet/outlet 121 functioning as a first fluid inlet passes through the internal flow paths, that is, the lumens, of the hollow fiber membranes 210 accommodated inside the middle case 110, and is then discharged through the fluid inlet/outlet 121 functioning as a first fluid outlet.

The ends of the hollow fiber membranes 210 are potted in the fixing part 130. The fixing part 130 binds the hollow fiber membranes 210 and fills the gaps between the hollow fiber membranes 210, as well as the gaps between the hollow fiber membranes 210 and the middle case 110. As a result, both ends of the middle case 110 are sealed by the fixing part 130, and a flow path through which the second fluid passes is formed therein. The material of the fixing part 130 is known in the art, and a detailed description thereof is omitted in this specification.

Hereinafter, an embodiment will be described through Examples and Comparative Examples, but it is not intended to limit the scope of the present invention to these Examples.

**(Example)**

### Example 1

A dope solution was prepared by mixing 20 wt% polystyrene (PS), 6 wt% polyvinylpyrrolidone (PVP), and 2 wt% of an antioxidant, $Ce(NO_3)_3$, into 72 wt% of a solvent, N-methylpyrrolidone (NMP). A core solution was prepared by mixing N-methylpyrrolidone (NMP) and ethanol at a volume ratio of 6:4. The spinning material was immersed in a coagulation bath containing a coagulation liquid by discharging the dope solution through the outer tube of a double-tubular nozzle and discharging the core solution through the inner tube. The spinning material was brought into contact with the coagulation liquid in the coagulation bath and was thus formed into a hollow fiber membrane. At this time, the coagulation liquid was used as a 1:1 (v/v) mixture of water and PEG, and the temperature was adjusted to 40 °C. The hollow fiber membrane that passed through the coagulation bath was washed in a washing bath with water at 40 °C and then dried to obtain a hollow fiber membrane. The thickness of the hollow fiber membrane was set to 100 μm.

Although the antioxidant used in Example 1 was $Ce(NO_3)_3$, similar effects were also confirmed when other antioxidants such as ethylene bis(oxyethylene) bis[β-(3-tert-butyl-4-hydroxy-5-methylphenyl)propionate] or benzenamine were used.

Example 2

A hollow fiber membrane was prepared in the same manner as in Example 1, except that the content of the antioxidant was changed to 3 wt% and the content of the solvent was changed to 71 wt%.

Example 3

A hollow fiber membrane was prepared in the same manner as in Example 1, except that the content of the antioxidant was changed to 5 wt% and the content of the solvent was changed to 69 wt%.

Example 4

A hollow fiber membrane was prepared in the same manner as in Example 1, except that the content of the antioxidant was changed to 0.1 wt% and the content of the solvent was changed to 73.9 wt%.

Comparative Example 1

A hollow fiber membrane was prepared in the same manner as in Example 1, except that no antioxidant was added and the content of the solvent was changed to 74 wt%.

Comparative Example 2

A hollow fiber membrane was prepared in the same manner as in Example 1, except that the content of the antioxidant was changed to 6 wt% and the content of the solvent was changed to 68 wt%.

**Evaluation Example 1: Deterioration/Decomposition Evaluation of the Humidification Membrane**

The humidification membranes prepared in Examples 1 to 4 and Comparative Examples 1 and 2 were immersed in Fenton reagent (3 % $H_2O_2$, 1 ppm $FeSO_4$) at 80 °C for 24 hours, and the molecular weight was analyzed. The change in molecular weight after immersion, compared to the molecular weight before immersion, was measured and recorded in Table 1 below.

[Table 1]

|  | Molecular Weight Reduction Ratio |
| --- | --- |
| Example 1 | 5 % |
| Example 2 | 3% |
| Example 3 | 1 % |
| Example 4 | 10 % |
| Comparative Example 1 | 30 % |
| Comparative Example 2 | 1 % |

Molecular weight reduction ratio =[(Initial molecular weight of the humidification membrane - Molecular weight of the humidification membrane after immersion)/Initial molecular weight of the humidification membrane] x 100

As shown in Table 1 above, it was confirmed that, when $Ce(NO_3)_3$ is added as an antioxidant to the humidification membrane composition, and especially when the content increases, deterioration and decomposition caused by peroxides and hydroxyl radicals may be effectively prevented.

**Evaluation Example 2: Performance Evaluation of the Humidification Membrane**

(Evaluation method)

Water vapor permeability: Water vapor permeability is measured based on the amount of water vapor transferred to the side of the dry air flowing through the lumen, while dry air is passed through the lumen and humid air is passed through the shell. A sample for measuring water vapor permeability is prepared and connected to the evaluation apparatus. Dry air is supplied to the lumen side at 70 °C, 20 slpm, and 0.1 barg, and humid air with a dew point of 75 °C, pressure of 0.8 barg, and flow rate of 20 slpm is supplied to the shell side. The dew point of the gas exiting from the lumen side is measured, and water vapor permeability is calculated.

Tensile strength: Tensile strength is measured using a general universal testing machine (UTM). The humidification membrane is gripped at both ends, and pulled at a speed of 50 mm/min until it breaks. The strength at the moment of breakage is recorded.

Nitrogen permeability: Nitrogen permeability is measured using CFP equipment. Nitrogen gas is blown into one end of the lumen at a pressure of 0.5 bar, while the other end of the lumen is sealed with polyurethane. The flow rate of nitrogen gas permeating to the shell side is measured.

Oxygen permeability: Oxygen permeability is evaluated using the same method as nitrogen permeability, except that the gas used is changed to air.

For the hollow fiber membranes manufactured in Examples 1 to 4 and Comparative Examples 1 and 2, water vapor permeability, tensile strength, nitrogen permeability, and oxygen permeability were measured according to the methods described above to confirm whether they possess properties suitable for application in humidifiers for fuel cells. The results are shown in Table 2 below.

[Table 2]

|  | Example 1 | Example 2 | Example 3 | Example 4 | Comparative Example 1 | Comparative Example 2 |
|---|---|---|---|---|---|---|
| Water vapor permeability (g/s.m2) | 0.18 | 0.18 | 0.17 | 0.18 | 0.18 | 0.09 |
| tensile strength (g/fiber) | 396 | 396 | 395 | 398 | 400 | 346 |
| Nitrogen permeability (cc/min.cm2) | 51 | 54 | 53 | 51 | 52 | 31 |
| Oxygen permeability (cc/min.cm2) | 51 | 54 | 53 | 51 | 52 | 31 |

The hollow fiber membranes to which antioxidants were applied in Examples 1 to 4 exhibited water vapor permeability similar to that of Comparative Example 1, in which no antioxidant was applied. This confirms that the antioxidants dispersed in the polymer do not significantly affect the formation or porosity of the hollow fiber membranes and that they are suitable for use in membrane humidifiers for fuel cells.

However, as in Comparative Example 2, when the antioxidant was added in an amount exceeding 5 wt%, specifically 6 wt%, it was confirmed that the porous structure of the polymer was not sufficiently formed during the hollow fiber membrane formation process, resulting in a decrease in water vapor permeability to below 0.1, making it unsuitable for use as a hollow fiber membrane in a membrane humidifier. That is, the hollow fiber membrane of Comparative Example 2 exhibited water vapor permeability that was not suitable for use in a membrane humidifier for a fuel cell. In addition, Comparative Example 2 also showed reduced nitrogen and oxygen permeability, which is believed to be due to the excessive presence of the antioxidant in the polymer, preventing sufficient formation of the porous structure of the polymer.

Based on these results, it may be seen that when the antioxidant is used in an amount of 0.01 parts to 5 parts by weight, it is possible to prevent deterioration of the hollow fiber membrane by oxidative substances while still allowing the membrane to be used as a hollow fiber membrane for a humidifier in a fuel cell.

**Claims**

1.   A hollow fiber membrane for a humidifier, comprising a polymer and an antioxidant, wherein the antioxidant is comprised in an amount of 0.01 parts to 5 parts by weight based on 100 parts by weight of the hollow fiber membrane.

2. The hollow fiber membrane for a humidifier of claim 1,
   wherein the antioxidant is present and dispersed in the polymer.

3. The hollow fiber membrane for a humidifier of claim 1,
   wherein at least a portion of the antioxidant is exposed on a surface of the polymer.

4. The hollow fiber membrane for a humidifier of claim 1,
   wherein a concentration of the antioxidant increases from an inner circumferential surface toward an outer circumferential surface of the hollow fiber membrane.

5. The hollow fiber membrane for a humidifier of claim 1,
   wherein the antioxidant comprises an organic antioxidant, a metallic antioxidant, an organic-metal antioxidant, a hindered amine light stabilizer (HALS)-based antioxidant, a sulfur-based antioxidant, a phosphorus-based antioxidant, or a combination thereof.

6. The hollow fiber membrane for a humidifier of claim 5,
   wherein the antioxidant comprises a metallic antioxidant.

7. The hollow fiber membrane for a humidifier of claim 1,
   wherein the antioxidant is comprised in an amount of 0.1 parts to 5 parts by weight.

8. The hollow fiber membrane for a humidifier of claim 1,
   wherein the polymer comprises a polyvinylidene fluoride (PVDF)-based polymer, a polysulfone-based polymer, sulfonated polysulfone, cellulose acetate, cellulose triacetate, polymethyl methacrylate, Nafion, a polystyrene (PS)-based polymer, a polytetrafluoroethylene (PTFE)-based polymer, a perfluorosulfonic acid (PFSA)-based polymer, a polyphenylsulfone-based polymer, a polyethersulfone (PES)-based polymer, a polyacrylonitrile (PAN)-based polymer, a polyetherimide (PEI)-based polymer, a polyimide (PI)-based polymer, or a combination thereof.

9. The hollow fiber membrane for a humidifier of claim 8,
   wherein the polymer comprises a polystyrene-based polymer.

10. The hollow fiber membrane for a humidifier of claim 1,
    wherein the polymer is comprised in an amount of 10 parts to 35 parts by weight based on 100 parts by weight of a dope solution.

11. The hollow fiber membrane for a humidifier of claim 1,
    wherein a thickness of the hollow fiber membrane is 60 $\mu$m to 300 $\mu$m.

12. The hollow fiber membrane for a humidifier of claim 1,
    wherein the hollow fiber membrane has a water vapor permeability of 0.1 g/s/m$^2$ or more, as measured under conditions of 1 bar pressure and 80 °C temperature.

13. The hollow fiber membrane for a humidifier of claim 1,
    wherein the hollow fiber membrane has a nitrogen permeability of 100 cc/min/cm$^2$ or less under a pressure condition of 0.5 bar.

14. The hollow fiber membrane for a humidifier of claim 1,
    wherein the hollow fiber membrane has an oxygen permeability of 100 cc/min/cm$^2$ or less under a pressure condition of 0.5 barg.

15. A method of manufacturing a hollow fiber membrane for a humidifier,
    comprising:

    obtaining a spinning dope by mixing an antioxidant in an amount of 0.01 parts to 5 parts by weight based on 100 parts by weight of the spinning dope;
    spinning the spinning dope into a coagulation bath through a nozzle; and
    coagulating the spinning dope in the coagulation bath.

**16.** The method of claim 15,

wherein the obtaining of the spinning dope comprises mixing the antioxidant and a polymer in a solvent, and the solvent comprises at least two solvents selected from a first solvent, a second solvent, and a third solvent.

**17.** The method of claim 16,

wherein the first solvent comprises butanol, isobutanol, octanol, pentanol, isopentanol, dimethyl phthalate, diethyl phthalate, dibutyl phthalate, dioctyl phthalate, polyoxyethylene octylphenyl ether, or a combination thereof;
the second solvent comprises water, methanol, ethanol, isopropanol, acetone, hexane, pentane, benzene, toluene, carbon tetrachloride, o-dichlorobenzene, polyethylene glycol, or a combination thereof; and
the third solvent comprises N-methyl-2-pyrrolidone, dimethyl sulfoxide, dimethylacetamide, dimethylformamide, methyl ethyl ketone, tetrahydrofuran, tetramethylurea, or trimethyl phosphate.

**18.** The method of claim 15,
further comprising post-treatment after the coagulating of the spinning dope.

**19.** The method of claim 18,
wherein the post-treatment comprises chemical treatment and/or physical treatment.

**20.** A humidifier comprising the hollow fiber membrane for a humidifier
according to any one of claims 1 to 14.

# FIG. 1

# FIG. 2

## INTERNATIONAL SEARCH REPORT

| International application No. |
| --- |
| **PCT/KR2024/006409** |

| A. | CLASSIFICATION OF SUBJECT MATTER |
| --- | --- |

**B01D 63/02**(2006.01)i; **H01M 8/04119**(2016.01)i

According to International Patent Classification (IPC) or to both national classification and IPC

| B. | FIELDS SEARCHED |
| --- | --- |

Minimum documentation searched (classification system followed by classification symbols)

B01D 63/02(2006.01); B01D 69/08(2006.01); B01D 69/10(2006.01); B01D 71/44(2006.01); B01D 71/68(2006.01); B60L 3/00(2006.01); B60L 58/30(2019.01); D01F 6/94(2006.01); F24F 6/00(2006.01); H01M 8/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 중공사막(hollow fiber membrane), 가습기(humidifier), 산화방지제(antioxidant), 분산(dispersion), 폴리머(polymer), 방사(spinning), 응고(coagulation), 용매(solvent)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2007-162176 A (NISSAN MOTOR CO., LTD.) 28 June 2007 (2007-06-28)<br>See paragraphs [0011], [0012], [0016], [0018], [0027] and [0030]-[0033]; and figure 1. | 1-20 |
| A | JP 2009-142799 A (DAICEL CHEM IND. LTD.) 02 July 2009 (2009-07-02)<br>See entire document. | 1-20 |
| A | JP 2020-151699 A (TORAY IND. INC.) 24 September 2020 (2020-09-24)<br>See entire document. | 1-20 |
| A | JP 2007-242523 A (AISIN SEIKI CO., LTD.) 20 September 2007 (2007-09-20)<br>See entire document. | 1-20 |
| A | KR 10-2022-0019865 A (HYUNDAI MOTOR COMPANY et al.) 18 February 2022 (2022-02-18)<br>See entire document. | 1-20 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 August 2024** | **16 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/006409**

| Patent document cited in search report | | | Publication date (day/month/year) | Patent family member(s) | | | Publication date (day/month/year) |
|---|---|---|---|---|---|---|---|
| JP | 2007-162176 | A | 28 June 2007 | None | | | |
| JP | 2009-142799 | A | 02 July 2009 | JP | 5297032 | B2 | 25 September 2013 |
| JP | 2020-151699 | A | 24 September 2020 | JP | 7367369 | B2 | 24 October 2023 |
| JP | 2007-242523 | A | 20 September 2007 | None | | | |
| KR | 10-2022-0019865 | A | 18 February 2022 | CN | 114079064 | A | 22 February 2022 |
| | | | | DE | 102020215566 | A1 | 10 February 2022 |
| | | | | US | 11581556 | B2 | 14 February 2023 |
| | | | | US | 2022-0045342 | A1 | 10 February 2022 |

Form PCT/ISA/210 (patent family annex) (July 2022)